# FASCICULE DE BREVET EUROPEEN

(11) **EP 0 666 445 B1**
(45) Date de publication et mention de la délivrance du brevet: **17.03.1999**
(21) Numéro de dépôt: 95420015.0
(22) Date de dépôt: 24.01.1995
(51) Int. Cl.: F16L 19/04, F16L 19/028

(54) **Dispositif de raccordement pour une extrémité d'un tube métallique rigide destiné au transport d'un fluide**
Verbindungsvorrichtung für das Ende eines starren fluidführenden Metallrohres
Connection device for a rigid metallic fluid conducting pipe end

(30) Priorité: 04.02.1994 FR 9401533
(43) Date de publication de la demande: 09.08.1995
(73) Titulaire: PARKER HANNIFIN SA, 74100 Annemasse (FR)
(72) Inventeur: Fuser, Laurent, F-74100 Annemasse (FR)
(74) Mandataire: Maureau, Philippe

(56) Documents cités:
- CH-A- 182 486
- US-A- 3 092 404
- US-A- 4 765 661

## Description

L'invention concerne un dispositif de raccordement pour une extrémité d'un tube métallique rigide destiné au transport d'un fluide, liquide ou gazeux, à basse pression (quelques MPa) ou à très haute pression (plusieurs centaines de MPa).

Dans les installations de transport de fluides sous pression, hydrauliques ou pneumatiques, la liaison étanche des tubes rigides entre eux, ou aux différents orifices des appareils, est généralement réalisée à l'aide de raccords à collets, c'est-à-dire de raccords comportant un écrou épaulé intérieurement et engagé sur l'un des deux tubes à raccorder, un collet aménagé à l'extrémité à raccorder de ce tube et rendant l'écrou précité prisonnier de ce tube, et un adaptateur fileté solidaire de l'autre tube et sur lequel l'écrou est destiné à être vissé, la face frontale de cet adaptateur contre laquelle est appliqué le collet du premier tube présentant un joint d'étanchéité disposé dans une gorge annulaire lui servant de logement.

L'adaptateur fileté solidaire du second tube est souvent une pièce de forme générale cylindrique, comportant un épaulement intérieur destiné à recevoir l'extrémité de ce tube et une zone filetée extérieure, et est assemblé à ce tube par brasure.

Pour réaliser un assemblage par brasure, une préparation des pièces à assembler est nécessaire. Ces pièces doivent être nettoyées, dégraissées et polies pour permettre une bonne adhérence du métal d'apport. Ensuite, pour le brasage proprement dit, il faut chauffer les pièces et faire fondre le fil ou l'anneau de brasage. Après cette opération, les pièces brasées sont nettoyées et le brasage est vérifié. Toutes ces opérations sont longues et coûteuses.

De plus, il n'est pas possible d'assembler entre elles par brasure des pièces traitées contre la corrosion. Ceci est donc très gênant lorsque les fluides transportés sont des fluides corrosifs.

Enfin, les produits utilisés pour la brasure sont des produits polluants et nocifs pour la santé. Des aménagements complexes sont alors nécessaires pour réaliser le brasage sans nuire à la santé de l'opérateur et à l'environnement.

Le but de l'invention est de fournir un dispositif de raccordement par lequel une pièce de raccordement est fixée sur l'extrémité d'un tube à l'aide d'une liaison mécanique , sans détérioration d'un éventuel traitement anti-corrosion, en mettant en oeuvre des moyens simples, ni nocifs pour la santé, ni polluants, et économiques.

Un autre but de l'invention est de fournir un procédé d'assemblage d'une pièce de raccordement sur l'extrémité d'un tube.

A cet effet, l'invention propose un dispositif de raccordement pour une extrémité d'un tube cylindrique métallique rigide creux destiné au transport de fluide, du type comportant une pièce de raccordement entourant l'extrémité du tube et fixée sur cette dernière, caractérisé en ce que la pièce de raccordement comporte, du côté de l'extrémité du tube, un évidement annulaire débouchant dans sa face frontale et dans sa face intérieure, à l'intérieur duquel se trouve un collet du tube formant une protubérance annulaire à l'extrémité de sa surface extérieure et retenant la pièce de raccordement prisonnière, et en ce qu'une gorge annulaire, destinée à recevoir un joint d'étanchéité, et dont une paroi est constituée par la face interne de la pièce de raccordement, est ménagée à l'extrémité du tube sur sa face frontale.

Le collet du tube à l'intérieur de l'évidement annulaire permet la fixation de la pièce de raccordement sur le tube. La gorge annulaire est destinée à recevoir un joint, torique par exemple, pour assurer l'étanchéité du raccordement avec un autre tube, ou un appareil.

Avantageusement, la paroi de la pièce de raccordement délimitant la gorge annulaire destinée à recevoir un joint d'étanchéité comporte, au niveau de la face frontale de la pièce de raccordement, une lèvre radiale destinée à la retenue du joint dans la gorge.

L'invention fournit également un procédé de réalisation d'un tel dispositif de raccordement. Ce procédé consiste :
- à emmancher une pièce de raccordement présentant, sur sa face intérieure, un évidement annulaire à l'une de ses extrémités, sur l'extrémité d'un tube, de telle sorte que l'évidement annulaire se trouve du côté de l'extrémité du tube,
- à faire dépasser l'extrémité du tube de la pièce de raccordement,
- à serrer la pièce de raccordement sur le tube à l'aide de mors de serrage,
- à introduire dans le tube, par son extrémité entourée de la pièce de raccordement, un bossage central tronconique d'une bouterolle, cette dernière comportant un flasque dont font saillie le bossage central tronconique d'un diamètre à la base sensiblement égal au diamètre intérieur du tube, et une nervure annulaire entourant le bossage central tronconique, concentrique à ce dernier, d'un diamètre extérieur au plus égal au diamètre de l'évidement annulaire de la pièce de raccordement,
- à animer la bouterolle d'un mouvement oscillant orbital, afin de déformer la paroi du tube et à repousser le métal vers l'intérieur de l'évidement annulaire de la pièce de raccordement, et
- à faire pénétrer le bossage central tronconique de la bouterolle dans le tube, jusqu'à ce que la nervure de la bouterolle vienne repousser le métal se trouvant à l'intérieur de l'évidement vers le fond de celui-ci, afin de former une gorge annulaire à l'extrémité du tube.

La forme de la nervure de la bouterolle détermine la forme de la gorge annulaire obtenue et dépend donc du type de joint destiné à prendre place dans cette gorge. Pour un joint torique par exemple, la nervure annulaire de la bouterolle comporte une paroi extérieure sensiblement parallèle à l'axe de la bouterolle, une paroi frontale sensiblement perpendiculaire à cet axe et une paroi intérieure en forme de tronc de cône, dont le sommet se trouve du côté opposé au tube.

Lorsque le dispositif de raccordement comporte une lèvre pour maintenir le joint dans la gorge, alors la surface frontale de la pièce de raccordement, située du côté de l'évidement annulaire, est en forme de tronc de cône, dont le sommet se trouve à l'extérieur de la pièce de raccordement et du côté de l'évidement annulaire et, lorsque la nervure de la bouteille forme la gorge annulaire, le flasque de la bouterolle déforme la surface frontale de la pièce de raccordement et forme une lèvre radiale sur le pourtour extérieur de la gorge annulaire. Il est cependant également possible d'obtenir une lèvre radiale au niveau de la face frontale de la pièce de raccordement par usinage.

De toute façon, l'invention sera bien comprise à l'aide de la description qui suit, en référence au dessin schématique annexé représentant, à titre d'exemple non limitatif, une forme d'exécution de ce dispositif de raccordement et différentes étapes illustrant le procédé de réalisation préféré de ce dispositif.

Les figures 1 à 3 illustrent le procédé d'obtention d'un dispositif de raccordement selon l'invention, ce dernier étant représenté en coupe longitudinale.

Les figures 4 et 5 représentent, à échelle agrandie, selon le même plan de coupe que les figures précédentes, un dispositif de raccordement selon l'invention et un joint torique.

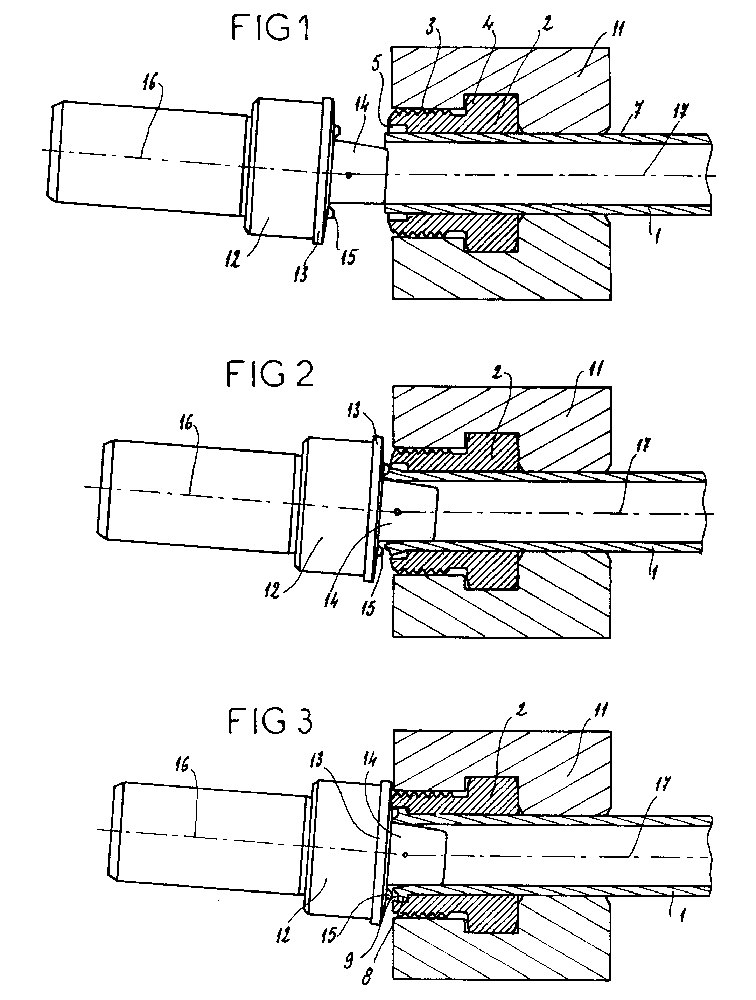

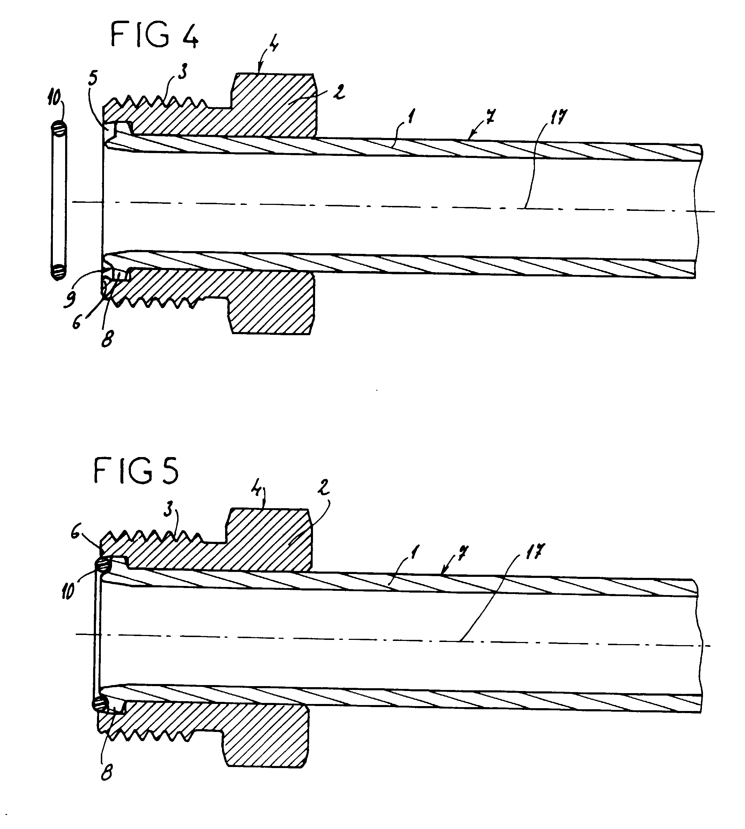

Les figures 4 et 5 représentent la partie mâle d'un raccord de deux tubes métaliques rigides selon l'invention, devant permettre une liaison étanche entre les deux tubes. Ces tubes sont destinés à conduire des fluides, liquides ou gazeux, sous une pression pouvant aller jusqu'à environ 100 MPa.

Le tube **1** à raccorder est entouré à son extrémité d'une pièce de raccordement **2**. Dans cette forme d'exécution, la pièce de raccordement présente, sur sa surface extérieure, une partie filetée **3** et partie épaulée à six pans **4**. La partie filetée **3** est destinée à recevoir un écrou, non représenté, ayant un filetage de même pas et retenu prisonnier d'un second tube par un collet aménagé à l'extrémité de ce tube. La partie à six pans **4** doit permettre de bien serrer l'écrou sur la partie filetée en permettant de maintenir fermement la pièce de raccordement **2** à l'aide d'une clef appropriée.

La pièce de raccordement **2** est munie d'un alésage axial, de diamètre égal au diamètre extérieur du tube. Elle comporte également un évidement annulaire **5**, ménagé dans son alésage à l'extrémité de la pièce de raccordement **2** et dans la face intérieure de celle-ci, du côté de l'extrémité du tube. Une lèvre **6** s'étend radialement vers l'intérieur de la pièce de raccordement **2**, à l'extrémité de cette dernière et sur toute la périphérie de l'évidement **5**.

Le tube **1** est de forme générale cylindrique creuse. A son extrémité, sa surface extérieure **7** présente un collet **8**, prenant place dans l'évidement annulaire **5** de la pièce de raccordement **2**. Le diamètre extérieur de ce collet **8** correspond au diamètre intérieur de l'évidement annulaire **5**. A l'extrémité du tube **1**, sur sa face frontale, se trouve une gorge annulaire **9**. Sa paroi de plus grand diamètre est constituée par une partie de la paroi intérieure de la pièce de raccordement **2**, son fond par la paroi extérieure du collet **8** du tube **1** et sa paroi de plus petit diamètre par la surface extérieure du tube **1**.

Un joint torique **10** vient se placer dans la gorge annulaire **9** comme représenté sur la figure 5. La lèvre **6** maintient ce joint **10** en place dans son logement **9**.

Selon l'invention, le collet annulaire **8** et la gorge **9** à l'extrémité du tube **1** sont obtenus par bouterollage.

Avant assemblage, le tube **1** et la pièce de raccordement **2** ont des formes légèrement différentes de celles décrites ci-dessus. Le tube **1** est de forme cylindrique creuse. Son extrémité ne présente ni collet, ni gorge. La pièce de raccordement **2** ne comporte pas de lèvre, mais sa surface frontale, du côté de l'évidement annulaire **5**, est en forme de tronc de cône, le sommet de ce cône se situant sur l'axe de la pièce de raccordement **2** à l'extérieur de celle-ci et du côté de l'évidement annulaire **5**.

La pièce de raccordement **2** est emmanchée sur le tube **1**, par son côté ne présentant pas d'évidement annulaire. La partie filetée **3** de la pièce **2**, ainsi que l'évidement **5** se retrouvent donc du côté de l'extrémité du tube. La pièce de raccordement **2** est positionnée sur le tube **1**, de telle sorte que l'extrémité du tube **1** dépasse de la pièce de raccordement **2**. Dans cette position, l'ensemble tube/pièce est introduit dans des mors de serrage **11**, dont le profil intérieur correspond au profil extérieur de l'ensemble tube/pièce. La pièce de raccordement **2** est ainsi serrée sur le tube **1** par les mors de serrage **11**.

Le bouterollage peut alors commencer.Un outil **12**, dénommé bouterolle, est utilisé. Il comporte un flasque **13** au centre duquel se dresse un bossage tronconique **14**, d'axe perpendiculaire au flasque **13**, dont le diamètre à la base au niveau du flasque **13**, est sensiblement égal au diamètre intérieur du tube **1**, et dont le diamètre diminue en s'éloignant du flasque **13**. Une nervure **15**, faisant saillie sur la même face du flasque **13** que le bossage **14**, est disposée concentriquement à ce dernier. Le diamètre extérieur de cette nervure **15** est légèrement inférieur au diamètre de l'évidement annulaire **5** de la pièce de raccordement **2**. Sa paroi extérieure est sensiblement parallèle à l'axe de la bouterolle, sa paroi frontale sensiblement perpendiculaire à cet axe et sa paroi intérieure en forme de tronc de cône, dont le sommet est sur l'axe de l'outil, du côté opposé au tube **1**.

Le bossage central **14** de la bouterolle **12** est introduit dans le tube, du côté où se trouve la pièce de raccordement **2**. Comme cela est connu en soi, l'axe **16** de la bouterolle **12** est entraîné par son porte-outil de manière à décrire un cône autour de l'axe **17** du tube **1** et à être déplacée en direction du tube **1**.

En outre, comme la bouterolle est montée dans son porte-outil, non représenté sur le dessin, de façon connue en soi par l'intermédiaire de paliers à billes ou similaire, le bossage central **14** déforme d'extrémité du tube **1** en poussant le métal radialement et la nervure **15** le pousse axialement vers le fond de l'évidement **5** en formant simultanément la gorge annulaire **9**, comme illustré sur les figures 2 et 3. Lorsque le flasque **13** vient au contact de la face frontale de la pièce de raccordement **2**, il roule sans glisser sur cette face mais en la pressant et la déformant, jusqu'à formation de la lèvre **6**.

Après achèvement de l'opération de bouterollage, la bouterolle **12** est retirée. On a alors le dispositif de raccordement tel que décrit plus haut. Il suffit de sortir le tube **1** muni de la pièce de raccordement du mors de serrage, de placer le joint torique **10** dans la gorge annulaire **9**, pour raccorder le tube **2** à un autre tube muni d'un écrou par exemple.

Ce procédé de fixation de la pièce de raccordement **2** sur le tube **1** ne nécessite pas de préparation spéciale des pièces, peut être réalisé sur des tubes ayant subi un traitement de surface, sa mise en oeuvre est économique et propre puisqu'elle ne met pas en oeuvre des produits nuisant à la santé et/ou polluant.

Comme il va de soi, l'invention ne se limite pas à la forme d'exécution et au procédé de réalisation préféré décrits ci-dessus à titre d'exemple ; elle en embrasse, au contraire, toutes les variantes.

Ainsi, la pièce de raccordement n'est pas nécessairement une pièce filetée et présentant six pans. Il peut s'agit de toute pièce permettant le raccordement, comme par exemple une douille avec un système de verrouillage par baïonnette ou par encliquetage.

Enfin, la lèvre **6** de retenue du joint torique **10** pourrait être obtenue par usinage.

## Revendications

1. Dispositif de raccordement pour une extrémité d'un tube cylindrique métallique rigide creux destiné au transport de fluide, du type comportant une pièce de raccordement entourant l'extrémité du tube et fixée sur cette dernière, caractérisé en ce que la pièce de raccordement (2) comporte, du côté de l'extrémité du tube (1), un évidement annulaire (5) débouchant dans sa face frontale et dans sa face intérieure, à l'intérieur duquel se trouve un collet (8) du tube formant une protubérance annulaire à l'extrémité de sa surface extérieure (7) et retenant la pièce de raccordement (2) prisonnière, et en ce qu'une gorge annulaire (9), destinée à recevoir un joint d'étanchéité (10), et dont une paroi est constituée par la face interne de la pièce de raccordement (2), est ménagée à l'extrémité du tube (1) sur sa face frontale.

2. Dispositif de raccordement selon la revendication 1, caractérisé en ce que la paroi de la pièce de raccordement (2) délimitant la gorge annulaire (9) destinée à recevoir un joint d'étanchéité (10) comporte, au niveau de la face frontale de la pièce de raccordement (2), une lèvre radiale (6) destinée à la retenue du joint (10) dans la gorge (9).

3. Procédé de réalisation d'un dispositif de raccordement selon la revendication 1, caractérisé en ce qu'il consiste :
- à emmancher une pièce de raccordement (2) présentant, sur sa face intérieure, un évidement annulaire (5) à l'une de ses extrémités, sur l'extrémité d'un tube (1), de telle sorte que l'évidement annulaire (5) se trouve du côté de l'extrémité du tube (1),
- à faire dépasser l'extrémité du tube (1) de la pièce de raccordement (2),
- à serrer la pièce de raccordement (2) sur le tube (1) à l'aide de mors de serrage (11),
- à introduire dans le tube (1), par son extrémité entourée de la pièce de raccordement (2), un bossage central tronconique (14) d'une bouterolle (12), cette dernière comportant un flasque (13) dont font saillie le bossage central tronconique (14) d'un diamètre à la base sensiblement égal au diamètre intérieur du tube, et une nervure annulaire (15) entourant le bossage central tronconique (14), concentrique à ce dernier, d'un diamètre extérieur au plus égal au diamètre de l'évidement annulaire (5) de la pièce de raccordement (2),
- à animer la bouterolle (12) d'un mouvement oscillant orbital, afin de déformer la paroi du tube et à repousser le métal vers l'intérieur de l'évidement annulaire (5) de la pièce de raccordement (2), et
- à faire pénétrer le bossage central tronconique (14) de la bouterolle (12) dans le tube (1), jusqu'à ce que la nervure (15) de la bouterolle vienne repousser le métal se trouvant à l'intérieur de l'évidement (5) vers le fond de celui-ci, afin de former une gorge annulaire (9) à l'extrémité du tube (1).

4. Procédé selon la revendication 3, caractérisé en ce que la nervure annulaire (15) de la bouterolle (12) comporte une paroi extérieure sensiblement parallèle à l'axe (16) de la bouterolle, une paroi frontale sensiblement perpendiculaire à cet axe (16) et une paroi intérieure en forme de tronc de cône, dont le sommet se trouve du côté opposé au tube (1).

5. Procédé selon l'une des revendications 3 ou 4, caractérisé en ce que la surface frontale de la pièce de raccordement (2), située du côté de l'évidement annulaire (5) est en forme de tronc de cône, dont le sommet se trouve à l'extérieur de la pièce de raccordement (2) et du côté de l'évidement annulaire (5), et en ce que, lorsque la nervure (15) de la bouterolle forme la gorge annulaire (9), le flasque (13) de la bouterolle déforme la surface frontale de la pièce de raccordement (2) et forme une lèvre radiale (6) sur le pourtour extérieur de la gorge annulaire (9).

6. Procédé selon l'une des revendications 3 ou 4, caractérisé en ce qu'une lèvre radiale (6) est usinée au niveau de la face frontale de la pièce de raccordement (2).

## Patentansprüche

1. Verbindungsvorrichtung für ein Ende eines für den Fluidtransport bestimmten starren, hohlen, zylindrischen Metallrohrs, welches ein das Ende des Rohres umgebendes und an ihm befestigtes Verbindungsstück aufweist,
dadurch gekennzeichnet, daß das Verbindungsstück (2) auf der Seite des Endes des Rohres (1) eine ringförmige Vertiefung (5) aufweist, die zur Stirnfläche und Innenfläche des Verbindungsstücks hin offen ist und in der sich ein Kragen (8) des Rohres befindet, der einen ringförmigen Vorsprung am Ende seiner Außenfläche (7) bildet und das Verbindungsstück (2) eingeschlossen hält, und daß eine Ringnut (9), die zur Aufnahme einer Dichtung (10) dient und bei der eine Wand aus der Innenfläche des Verbindungsstücks (2) besteht, an dem Ende des Rohres (1) an dessen Stirnfläche eingearbeitet ist.

2. Verbindungsvorrichtung nach Anspruch 1, dadurch gekennzeichnet, daß die Wand des Verbindungsstücks (2), welche die zur Aufnahme einer Dichtung (10) dienende Ringnut (9) begrenzt, bei der Stirnfläche des Verbindungsstücks (2) eine radiale Lippe (6) aufweist, die zum Halt der Dichtung (10) in der Nut (9) dient.

3. Verfahren zur Herstellung einer Verbindungsvorrichtung nach Anspruch 1, dadurch gekennzeichnet, daß es die folgenden Schritte aufweist:
- Hineinpressen eines Verbindungsstücks (2), das an seiner Innenfläche eine ringförmige Vertiefung (5) an einem seiner Enden aufweist, in das Ende eines Rohres (1), so daß sich die ringförmige Vertiefung (5) auf der Seite des Endes des Rohres (1) befindet,
- Herausragenlassen des Endes des Rohres (1) aus dem Verbindungsstück (2),
- Festklemmen des Verbindungsstücks (2) auf dem Rohr (1) mit Hilfe eines Festklemmrings (11),
- Einführen eines mittigen kegelstumpfförmigen Buckels (14) eines Schelleisens (12) in das Rohr (1) durch sein von dem Verbindungsstück (2) umgebenes Ende, wobei das Schelleisen einen Flansch (13) aufweist, von dem der mittige kegelstumpf-förmige Buckel (14) mit einem an seiner Basis im wesentlichen dem Innendurchmesser des Rohres gleichen Durchmesser sowie eine den mittigen kegelstumpfförmigen Buckel (14) umgebende und zu diesem konzentrische ringförmige Rippe (15) hervorstehen, deren Außendurchmesser höchstens gleich dem Durchmesser der ringörmigen Vertiefung (5) des Verbindungsstücks (2) ist,
- Bewegen des Schelleisens (12) in einer kreisenden Schwingungsbewegung, um die Wand des Rohres zu verformen und das Metall in die ringförmige Vertiefung (5) des Verbindungsstücks (2) hineinzutreiben, und
- Eindringenlassen des mittigen kegelstumpfförmigen Buckels (14) des Schelleisens (12) in das Rohr (1), bis die Rippe (15) des Schelleisens (12) das sich in der Vertiefung (5) befindende Metall zu deren Boden hin zurücktreibt, um eine Ringnut (9) am Ende des Rohres (1) zu formen.

4. Verfahren nach Anspruch 3, dadurch gekennzeichnet, daß die ringförmige Rippe (15) des Schelleisens (12) eine im wesentlichen parallel zur Achse (16) des Schelleisens verlaufende Außenwand, eine im wesentlichen senkrecht zu dieser Achse (16) verlaufende Vorderwand und eine Innenwand in Form eines Kegelstumpfs aufweist, dessen Scheitel sich auf der zum Rohr (1) entgegengesetzten Seite befindet.

5. Verfahren nach einem der Ansprüche 3 oder 4, dadurch gekennzeichnet, daß die Stirnfläche des Verbindungsstücks (2), die sich auf der Seite der ringförmigen Vertiefung (5) befindet, die Form eines Kegelstumpfs hat, dessen Scheitel sich außerhalb von dem Verbindungsstück (2) und auf der Seite der ringförmigen Vertiefung (5) befindet, und daß, wenn die Rippe (15) des Schelleisens die Ringnut (9) formt, der Flansch (13) des Schelleisens die Stirnfläche des Verbindungsstücks (2) verformt und eine radiale Lippe (6) auf dem äußeren Umfang der Ringnut (9) formt.

6. Verfahren nach einem der Ansprüche 3 oder 4, dadurch gekennzeichnet, daß eine radiale Lippe (6) bei der Stirnfläche des Verbindungsstücks (2) eingearbeitet wird.

## Claims

1. A connecting device for one end of a hollow, rigid, metal, cylindrical pipe for conveying fluid, of the type comprising a connecting piece surrounding the end of the pipe and fixed thereto, characterised in that the connecting piece (2) has, in the direction of the end of the pipe (1), an annular recess (5) which opens into the front surface and the inner surface of the connecting piece (2) and inside which is arranged a collar (8) of the pipe, forming an annular projection at the end of the outer surface (7) thereof and holding the connecting piece (2) captive, and in that an annular groove (9), which is intended to receive a seal (10) and one wall of which is formed by the inner surface of the connecting piece (2), is provided at the end of the pipe (1) on the front surface thereof.

2. A connecting device according to claim 1, characterised in that the wall of the connecting piece (2), bounding the annular groove (9) for receiving a seal (10), comprises, at the level of the front surface of the connecting piece (2), a radial lip (6) for keeping the seal (10) in the groove (9).

3. A method of producing a connecting device according to claim 1, characterised by the steps of:
- fitting a connecting piece (2), having an annular recess (5) in its inner surface at one of its ends, onto the end of a pipe (1) in such a manner that the annular recess (5) faces in the direction of the end of the pipe (1),
- causing the end of the pipe (1) to project from the connecting piece (2),
- clamping the connecting piece (2) to the pipe (1) by means of clamping jaws (11),
- introducing into the pipe (1), by way of its end surrounded by the connecting piece (2), a central tapered boss (14) of a riveting die (12), the latter comprising a flange (13) from which project the central tapered boss (14), having a diameter at the base substantially equal to the inner diameter of the pipe, and an annular rib (15) surrounding the central tapered boss (14) and concentric therewith and having an outer diameter at most equal to the diameter of the annular recess (5) in the connecting piece (2),
- imparting an orbital oscillating movement to the riveting die (12) in order to deform the wall of the pipe and push the metal towards the interior of the annular recess (5) in the connecting piece (2), and
- causing the central tapered boss (14) of the riveting die (12) to penetrate the pipe (1) until the rib (15) of the riveting die pushes the metal inside the recess (5) towards the base thereof so as to form an annular groove (9) at the end of the pipe (1).

4. A method according to claim 3, characterised in that the annular rib (15) of the riveting die (12) comprises an outer wall substantially parallel with the axis (16) of the riveting die, a front wall substantially perpendicular to the said axis (16) and an inner wall in the form of a truncated cone, the vertex of which faces away from the pipe (1).

5. A method according to either one of claims 3 and 4,
characterised in that the front surface of the connecting piece (2), facing in the direction of the annular recess (5), is in the form of a truncated cone, the vertex of which is arranged outside the connecting piece (2) and in the direction of the annular recess (5), and in that, when the rib (15) of the riveting die forms the annular groove (9), the flange (13) of the riveting die deforms the front surface of the connecting piece (2) and forms a radial lip (6) on the outer circumference of the annular groove (9).

6. A method according to either one of claims 3 and 4,
characterised in that a radial lip (6) is worked at the level of the front surface of the connecting piece (2).
